# EUROPÄISCHE PATENTANMELDUNG

(11) **EP 4 279 550 A1**
(43) Veröffentlichungstag der Anmeldung: **22.11.2023**
(21) Anmeldenummer: 22174400.6
(22) Anmeldetag: 19.05.2022
(51) Int. Cl.: C09D 5/14

(54) **ALUMINIUMBAND MIT ANTIBAKTERIELLER BESCHICHTUNG**

(71) Anmelder: Speira GmbH, 41515 Grevenbroich (DE)
(72) Erfinder: BAKIREL, Ishak, 50859 Köln (DE); DIERKER, Annika, 40593 Düsseldorf (DE)
(74) Vertreter: Cohausz & Florack

(57) **Zusammenfassung**

Die Erfindung betrifft ein Aluminiumband zur Herstellung einer Verpackung eines festen, flüssigen oder gasförmigen Füllguts bestehend aus einer Aluminiumlegierung, wobei das Aluminiumband mindestens eine ein- oder eine beidseitige antibakterielle Beschichtung aufweist. Die Aufgabe, ein Aluminiumband bestehend aus einer Aluminiumlegierung mit mindestens einer ein- oder beidseitigen antibakteriellen Beschichtung vorzuschlagen, das bei sehr guter antibakterieller Wirkung der Beschichtung sich einfacher herstellen lässt und bei äußerst geringen Konzentrationen der antibakteriellen Substanz bereits sehr gute antibakterielle Eigenschaften bereitstellen kann, wird dadurch gelöst, dass die antibakterielle Beschichtung als antibakterielle Substanz ZnMoO₄ enthält.

## Beschreibung

Die Erfindung betrifft ein Aluminiumband zur Herstellung einer Verpackung eines festen, flüssigen oder gasförmigen Füllguts bestehend aus einer Aluminiumlegierung, wobei das Aluminiumband mindestens eine ein- oder eine beidseitige, außenliegende antibakterielle Beschichtung aufweist. Ferner betrifft die Erfindung ein Verfahren zur Herstellung eines entsprechenden Aluminiumbands, bei welchem ein Walzbarren oder ein Gießband aus einer Aluminiumlegierung gegossen wird, der Walzbarren oder optional das Gießband homogenisiert wird, der Walzbarren oder das Gießband zu einem Warmband warmgewalzt wird, das Warmband mit oder ohne mindestens einer Zwischenglühung auf eine optionale Enddicke von 0,1 mm bis 0,3 mm kaltgewalzt wird. Schließlich betrifft die Erfindung auch einen Dosendeckel oder Dosenkörper einer Dose, insbesondere einer Getränkedose sowie eine Getränkedose.

Aluminiumbänder, welche zur Herstellung einer Verpackung eines festen, flüssigen oder gasförmigen Füllguts verwendet werden, bestehen üblicherweise aus einer Aluminiumlegierung, welche auf die Erfordernisse zur Herstellung der Verpackung, insbesondere auch einer Lebensmittelverpackung, spezifisch abgestimmt sind. Die Aluminiumlegierung durchläuft dabei Fertigungsschritte vom Gießen eines Walzbarrens oder eines Gießbands bis zum Kaltwalzen an Enddicke bis schließlich ein Aluminiumband mit spezifischen mechanischen Eigenschaften sowie spezifischer Dicke bereitgestellt wird, das zur Weiterverarbeitung zur Verpackung geeignet ist. Anschließend durchläuft das Aluminiumband Fertigungsschritte, insbesondere Umformschritte, zur Bereitstellung der Verpackung eines festen, flüssigen oder gasförmigen Füllguts.

Ein typisches Beispiel einer solchen Verpackung besteht in einer Dose, insbesondere einer Getränkedose. Getränkedosen bestehen aus einem Dosendeckel und aus einem Dosenkörper, welche beispielsweise über eine Bördelung luftdicht miteinander verbunden werden. Der Dosenkörper kann hier auch zweiteilig ausgebildet sein.

Zum Schutz des Aluminiums vor einem Angriff durch das Füllgut, beispielsweise einem Getränk, werden Aluminiumbänder für die Herstellung von Dosen, insbesondere Getränkedosen, innen mit einer Lackschicht beschichtet. Eine äußere Lackschicht zum Beispiel auf dem Dosenkörper dient zur Durchführung der Verarbeitungsprozesse zum Dosenkörper und zur Bereitstellung eines dekorativen Aussehens der Dose, zum Beispiel um die Markenzugehörigkeit zu signalisieren. Der Dosendeckel ist sowohl innen als auch außen mit einer Beschichtung, insbesondere einer Lackschicht zum Schutz des Füllguts vor einem Aluminiumeintrag versehen.

Aus der japanischen Patentanmeldung JP H09 77077 A ist nun eine Getränkedose bekannt, bei welcher eine antibakterielle Substanz auf der Außenfläche der Getränkedosen aufgebracht wurde, um bei der Herstellung, insbesondere nach der Befüllung der Getränkedosen eine Besiedlung der Getränkedose mit Mikroben zu verhindern. Als antibakterielle Substanzen werden auch zinkbasierte anorganische antibakterielle Substanzen genannt, welche bevorzugt anorganische Adsorber, wie beispielsweise Aktivkohle, Aktivtonerde oder Kieselgel etc. aufweisen.

Aus der japanischen Patentanmeldung JP H08 301362 A ist ferner ein Verfahren zur Herstellung einer Getränkedose mit antibakterieller Beschichtung bekannt, bei welchem die antibakteriellen Substanzen Silber-, Kupfer- oder Gold-Ionen in einem anorganischen Adsorber wie Zeolith, Kieselgel oder Zirkonphosphat aufweisen. Aufgrund der Verwendung von Adsorptionsmitteln zur Aufnahme von Metallionen sind bei beiden aus dem Stand der Technik bekannten Getränkedosen zusätzliche Herstellschritte notwendig, um eine antibakterielle Beschichtung bereitzustellen . Zeolith sowie Kieselgele haben zusätzlich hygroskopische Eigenschaften, welche die Grundeigenschaften des Lackfilms wie die Wasseraufnahme negativ beeinflussen. Darüber hinaus ist beispielsweise Aktivkohle im Hinblick auf die dekorative Beschichtung von Getränkedosen nur beschränkt einsetzbar, da es eine transparente antibakterielle Lackschicht beispielsweise nicht zulässt.

Von diesem Stand der Technik ausgehend liegt der vorliegenden Erfindung die Aufgabe zu Grunde, ein Aluminiumband bestehend aus einer Aluminiumlegierung mit mindestens einer ein- oder beidseitigen, außenliegenden antibakteriellen Beschichtung vorzuschlagen, dass sich bei sehr guter antibakterieller Wirkung der Beschichtung einfacher herstellen lässt und bei besonders geringen Konzentrationen der antibakteriellen Substanz bereits sehr gute antibakterielle Eigenschaften bereitstellen kann.

Gemäß einer ersten Lehre der vorliegenden Erfindung wird die aufgezeigte Aufgabe dadurch gelöst, dass die antibakterielle Beschichtung als antibakterielle Substanz ZnMoO₄ enthält. Es hat sich herausgestellt, dass Zinkmolybdat bereits bei sehr geringen Konzentrationen gute antibakterielle Eigenschaften bereitstellen kann und das Wachstum von Bakterien auf entsprechenden Beschichtungsoberflächen gut eindämmen kann. Zinkmolybdat führt zur in-situ Bildung von freien Radikalen auf der Oberfläche der Beschichtung bei Anwesenheit von Wasser oder Luftfeuchtigkeit, welche eine antibakterielle Wirkung haben. Da Zinkmolybdat ohne Trägermaterial, wie beispielsweise Zeolithe oder Aktivkohle, einsetzbar ist, kann es besonders einfach mit vorhandenen Beschichtungssystemen kombiniert werden und eine antibakterielle Wirkung entfalten. Besonders vorteilhaft ist es auch, wenn die antibakterielle Beschichtung ausschließlich Zinkmolybdat als antibakterielle Substanz enthält. Es hat sich gezeigt, dass die erfindungsgemäßen Beschichtungen auch ohne zusätzliche antibakteriell wirkende oder die antibakterielle Wirkung unterstützende Mittel hervorragende antibakterielle Eigenschaften aufweist.

Gemäß einer ersten Ausgestaltung des Aluminiumbandes beträgt die Konzentration von Zinkmolybdat (ZnMoO₄) in der antibakteriellen Beschichtung mindestens 0,1 Gew.-% bis maximal 4 Gew.-%, vorzugsweise 0,2 Gew.-% bis 2 Gew.-%, bevorzugt 0,25 Gew.-% bis 1,0 Gew.-%, weiter bevorzugt 0,5 Gew.-% bis 1,0 Gew.-% im Trockenzustand der Beschichtung. Bereits bei den soeben angegebenen, geringen Konzentrationen stellt ZnMoO₄ sehr gute antibakterielle Eigenschaften bereit. Als eingebrachtes Metallsalz in der antibakteriellen Beschichtung unterliegt die antibakterielle Substanz dabei keinem "Verbrauch", so dass die antibakterielle Wirkung in Verbindung mit der Anwesenheit von Wasser oder Luftfeuchtigkeit durch in situ Bildung von H₃O⁺-Ionen dauerhaft bereitgestellt werden kann. Schließlich werden aufgrund der geringen Konzentrationen an ZnMoO₄, welche zur Bereitstellung der antibakteriellen Eigenschaft erforderlich sind, die weiteren Eigenschaften der Beschichtung sowohl im Nasszustand als auch im Trockenzustand nicht beeinflusst.

Es hat sich darüber hinaus herausgestellt, dass ein erfindungsgemäßes, antibakteriell beschichtetes Aluminiumband ohne weiteres für die Produktionsprozesse zur Herstellung von Verpackungen von festen, flüssigen oder gasförmigen Füllgütern, insbesondere zur Herstellung von Getränkedosen, vorzugsweise von Getränkedosendeckeln geeignet ist. Zinkmolybdat ist darüber hinaus geeignet, mit Lebensmitteln in Kontakt zu kommen, so dass auch eine Innenbeschichtung der Verpackung bereitgestellt werden kann. Die Ergebnisse vom Migrationstest für die Metalle Zink und Molybdän zeigten besonders niedrige, unbedenkliche Ergebnisse. Bei den vorgeschlagenen Konzentrationen der erfindungsgemäßen Beschichtung kann die antibakterielle Beschichtung daher auch mit Lebensmitteln in Kontakt stehen.

Gemäß einer weiteren Ausgestaltung des Aluminiumbands weist die ein- oder beidseitige antibakterielle Beschichtung des Aluminiumbands ein Trockengewicht von 0,5 g/m² bis 15 g/m², vorzugsweise 2 g/m² bis 12 g/m², bevorzugt 3 g/m² bis 6 g/m², weiter bevorzugt 3,5 g/m² bis 5 g/m²auf. Mit dem Trockengewicht wird die Beschichtungsdicke der Aluminiumbänder von Getränkedosen angegeben. Das Trockengewicht einer Beschichtung kann grundsätzlich gravimetrisch bestimmt werden, was üblicherweise auch zur Kalibrierung weiterer Verfahren zur Messung des Trockengewichts genutzt wird. Als weitere Verfahren zur Messung des Trockengewichts stehen gravimetrisch kalibrierte Wirbelstrommessverfahren oder Nahinfrarot-Messverfahren zur Verfügung. Überraschenderweise konnte bei diesen geringen Trockengewichten bereits eine sehr gute antibakterielle Wirkung der Beschichtung auf den Aluminiumbändern nachgewiesen werden. Die Flächenkonzentration der antibakteriellen Substanz beträgt vorzugsweise lediglich 0,5 mg/m² bis 600 mg/m², vorzugsweise 1,5 mg/m² bis 100 mg/m², bevorzugt 10 mg/m² bis 55 mg/m². Selbst bei diesen geringen Trockengewichten der antibakteriellen Substanz konnte eine sehr gute Reduzierung der Besiedlung durch Keime in Tests gemäß ISO 22196 nachgewiesen werden. Die Trockengewichte der Beschichtung ergeben Beschichtungsdicken der Aluminiumbänder, welche in den Verarbeitungsverfahren des Aluminiumbands zur fertigen Verpackung, beispielsweise Getränkedosendeckel, ohne Probleme verarbeitet werden können.

Bevorzugt ist die antibakterielle Beschichtung für die außenliegende, unmittelbar mit Keimen in Kontakt stehende Seite der Aluminiumverpackung vorgesehen. Eine antibakterielle Beschichtung der mit dem Füllgut in Kontakt stehenden "inneren" Seite des Aluminiumbands kann aber ebenso durch eine ein- oder beidseitige antibakterielle Beschichtung realisiert werden.

Vorzugsweise weist das Aluminiumband eine Dicke von 0,1 mm bis 0,3 mm, bevorzugt 0,15 mm bis 0,25 mm auf, sodass mit dem Aluminiumband druckfeste, dennoch leichte Verpackungen für feste, flüssige oder gasförmige Füllgüter, insbesondere für Getränkedosen, hergestellt werden können.

Vorzugsweise ist das Aluminiumband ein Aluminiumband zur Herstellung einer Dose, vorzugsweise zur Herstellung einer Getränkedose, insbesondere ein Aluminiumdosendeckelband, sodass Getränkedosen mit antibakteriellen Eigenschaften versehen werden können, ohne die Produktionsprozesse grundlegend ändern zu müssen. Die Hygiene beim Trinken aus den Getränkedosen wird durch die Verwendung eines erfindungsgemäßen Aluminiumdosendeckelbands deutlich verbessert.

Vorzugsweise besteht das Aluminiumband gemäß einer weiteren Ausgestaltung aus einer Aluminiumlegierung vom Typ A5xxx oder A3xxx, vorzugsweise vom Typ AA5182 oder vom Typ AA3104, AA3105 oder AA3004. Diese genannten Aluminiumlegierungstypen werden häufig zur Bereitstellung von Getränkedosen eingesetzt, da diese neben den notwendigen Festigkeitsanforderungen auch die notwendigen Umformeigenschaften bereitstellen. Aluminiumlegierungen vom Typ AA3xxx sind grundsätzlich kostengünstiger in der Herstellung aufgrund der günstigeren Ausgangslegierungen und der Möglichkeit zum Einsatz von Recyclingwerkstoffen. Bevorzugt ist der Recyclinganteil höher als 60%. Bevorzugt werden aber auch die Aluminiumlegierungen vom Typ AA5xxx, insbesondere AA5182 mit Recyclinganteil, von beispielsweise mehr als 50 % verwendet.

Wird die antibakterielle Beschichtung als antibakterielle Lackschicht ausgebildet, welche mindestens ein Bindemittel und ZnMoO₄ als antibakterielle Substanz enthält, können übliche Lacksysteme mit bekannten Eigenschaften zur antibakteriellen Beschichtung von Aluminiumbändern für die Herstellung von Verpackungen für feste, flüssige oder gasförmige Füllgüter, insbesondere Getränkedosen bereitgestellt werden. Die antibakterielle Substanz ZnMoO₄ lässt sich dabei auf einfache Weise in flüssige, pastöse oder Pulver förmige Lacke einmischen. Bevorzugt weist ZnMoO₄ eine Partikelgröße von 0,1 µm bis 20 µm, bevorzugt 0,5 µm bis 5 µm auf, weiter bevorzugt 0,5 µm bis 2 µm. Eine Verringerung der Partikelgröße führt zu einer höheren Wirksamkeit, wobei unter einer Partikelgröße von 0,5 µm das Handling der Substanz aufgrund von Staubentwicklung zu schwierig wird. Bei einer Partikelgröße von mehr als 20 µm verringert sich die antibakterielle Wirkung bei identischer Konzentration der antibakteriellen Substanz. Bevorzugt weist die antibakterielle Beschichtung als antibakterielle Substanz ausschließlich ZnMoO₄ auf. Wie bereits ausgeführt, reicht die alleinige Verwendung von ZnMoO₄ auch in geringen Konzentrationen aus, um hervorragende antibakterielle Eigenschaften der Beschichtung bereitstellen zu können.

Grundsätzlich kann die antibakterielle Beschichtung aufgrund der Temperaturstabilität von ZnMoO₄ aber auch durch Extrusionsbeschichten oder Kaschieren auf das Aluminiumband aufgebracht werden.

Zur verbesserten Haftung der antibakteriellen Beschichtung kann das Aluminiumband vorzugsweise mindestens eine chromfreie Passivierungsschicht aufweisen. Das Aluminiumband weist vorzugsweise nur auf der beschichteten Seite eine Oberflächenpassivierung auf, denkbar ist aber auch eine zweiseitige Passivierungsbeschichtung. Vorzugsweise wird als Passivierungsschicht eine Zirkoniumphosphatierung eingesetzt, diese zeigt besonders gute Hafteigenschaften in Verbindung mit den üblichen Lacksystemen zur Beschichtung der Aluminiumbänder. Denkbar sind aber auch andere Passivierungssysteme, beispielsweise auf Titan- und Zirkon-Basis oder auf Basis von Chrom.

Vorzugsweise ist die antibakterielle Beschichtung pasteurisationsbeständig und/oder sterilisationsbeständig. Unter pasteurisationsbeständig oder sterilisationsbeständig wird verstanden, dass die antibakterielle Beschichtung nach Temperatureinwirkung unter Pasteurisationsbedingungen oder Sterilisationsbedingungen keine nachteiligen Eigenschaften, insbesondere keine Verfärbungen des Lacks respektive der Beschichtung oder andere Fehler aufweist. Zum Testen der Pasteurisationsbeständigkeit wird die Probe auf 85 °C für 30 Minuten erhitzt. Für den Nachweis der Sterilisationsbeständigkeit werden die Proben für 45 Minuten mit 130 °C heißem Wasser in Kontakt gebracht. Es hat sich herausgestellt, dass Zinkmolybat mit den konventionellen Lacksystemen gut harmoniert und damit Lacksysteme mit besonders guten Eigenschaften im Hinblick auf eine Pasteurisationsbeständigkeit und/oder Sterilisationsbeständigkeit eingesetzt werden können. Um Lebensmittel haltbar zu machen, werden diese häufig einer Pasteurisierung unterzogen, bei welcher die Lebensmittel auf eine Temperatur von mehr als 72 °C bis 100 °C für wenige Sekunden erwärmt werden, um die Keimanzahl zu reduzieren. Häufig werden diese Prozesse unmittelbar vor dem Abfüllen der Getränkedosen durchgeführt, so dass auch die Beschichtungen der Getränkedose solchen Temperaturen ausgesetzt sind. Sofern eine Pasteurisations- oder Sterilisationsbeständigkeit der Beschichtungen nach den oben genannten Kriterien nachgewiesen ist, sind diese Beschichtungen auch für die üblichen Pasteurisations- oder Sterilisationsbedingungen gut geeignet.

Pasteurisationsbeständige Lackschichten werden gemäß einer weiteren Ausgestaltung dadurch bereitgestellt, dass die antibakterielle Beschichtung eine Lackschicht auf Lösemittel-Epoxidharz-Basis, auf Lösemittel-Polyester-Basis, auf Basis einer Epoxidharz -Wasser-Dispersion oder auf Basis einer Polyolefin-Wasser-Dispersion ist. Denkbar ist auch die Verwendung einer Polyester-Wasser -Dispersion als Lackschicht. Alle genannten Lacke haben eine hohe Temperaturbeständigkeit und zeigen bei Pasteurisationstests mit Temperaturen von 85 °C für mindestens 30 Minuten keine Vergilbungseffekte, das sogenannte "Blushing". Damit können die Aluminiumdosen oder auch Verpackungen mit entsprechend antibakteriellen Beschichtungen ohne Probleme unmittelbar nach Pasteurisation der Füllgüter abgefüllt werden. Wässriges oder lösemittelhaltiges Polyester-Melamin, lösemittelhaltiges Epoxy-Melamin, wässrige Epoxy-Acrylat-Dispersion, wässrige Acrylat- oder Polyolefin-Dispersion aber auch Polyester-Acrylat-Dispersion sowie Alkyd kommen als Lackschichtsysteme in Frage.

Gemäß einer weiteren Lehre der vorliegenden Erfindung wird die zuvor aufgezeigte Aufgabe für ein Verfahren zur Herstellung eines Aluminiumbands dadurch gelöst, dass das Aluminiumband ein- oder beidseitig mit mindestens einer antibakteriellen Beschichtung beschichtet wird, wobei die antibakterielle Beschichtung ZnMoO₄ enthält, wobei optional die antibakterielle Beschichtung als antibakterielle Substanz ausschließlich ZnMoO₄ enthält. Wie zuvor ausgeführt, eignet sich die antibakterielle Substanz ZnMoO₄ als Metallsalz bereits in sehr geringen Konzentrationen hervorragend für die Bereitstellung von antibakterielle Beschichtungen aufweisenden Aluminiumbändern. Das Beschichtungsverfahren kann in den Herstellprozess der Aluminiumbänder auf einfache Weise integriert werden, sodass nach dem Kaltwalzen und einer optionalen Wärmebehandlung die fertiggewalzten Aluminiumbänder mit der antibakteriellen Beschichtung beschichtet werden können. Bevorzugt werden die Aluminiumbänder jedoch im walzharten Zustand, H18 oder H19, dem Beschichten zugeführt.

Gemäß einer weiteren Ausgestaltung des Verfahrens wird vor der Beschichtung des Aluminiumbands mit einer antibakteriellen Beschichtung das Aluminiumband einer ein- oder beidseitigen, chromfreien Oberflächenpassivierung unterzogen. Bevorzugt wird eine Zirkoniumphosphatierung durchgeführt. Die Oberflächenpassivierung erfolgt vorzugsweise im No-Rinse-Verfahren, bei welchem das Passivierungsmittel auf das Aluminiumband unter Verwendung eines Roll-Coatingverfahrens aufgebracht und eingetrocknet wird. No-Rinse-Verfahren, also Verfahren ohne Spülschritt, sind wirtschaftlicher und umweltfreundlicher als Verfahren zur Oberflächenpassivierung von Aluminiumbändern mit Spülschritten.

Grundsätzlich stehen diverse Verfahren zum Aufbringen der antibakteriellen Beschichtung auf das Aluminiumband zur Verfügung. Gemäß einer vorteilhaften Ausgestaltung erfolgt das Auftragen der antibakteriellen Beschichtung auf das Aluminiumband durch ein ein- oder beidseitiges Coil-Coating-Verfahren, vorzugsweise unter Verwendung eines Roll-Coating-Verfahrens. Beim Coil-Coating erfolgt die Beschichtung Coil weise, d.h. das Aluminiumband wird von einem Coil abgewickelt, beschichtet und wieder auf ein anderes Coil aufgewickelt, bzw. aufgehaspelt. Beim Roll-Coating-Verfahren wird die Beschichtung durch Rollen auf das Aluminiumband aufgetragen. Hierdurch lassen sich bei hoher Beschichtungsgeschwindigkeit sehr präzise Beschichtungsdicken bereitstellen. Selbstverständlich stehen prinzipiell auch andere Beschichtungsverfahren zur Verfügung, wie beispielsweise ein Aufsprühen oder ein elektrostatisches Aufsprühen der Beschichtung. Zudem kann das Aufbringen der Passivierungsschicht gemeinsam mit dem Coil-Coating-Verfahren für die antibakterielle Beschichtung, vorzugsweise unmittelbar nachfolgend, also "in Line" durchgeführt werden. Hierdurch können die Walzprozesse der Bandherstellung selbst unabhängig von der Vorbereitung der Aluminiumbänder für Beschichtungen durchgeführt und die Produktionsflexibilität erhöht werden.

Gemäß einer weiteren Ausgestaltung des erfindungsgemäßen Verfahrens wird die antibakterielle Beschichtung des Aluminiumbands bei einer maximalen Metalltemperatur von 180°C bis 300 °C, vorzugsweise 230 °C bis 260 °C eingebrannt, wobei die Einbrenndauer 5 s bis 45 s, vorzugsweise 8 s bis 30 s beträgt. Mit diesen maximalen Metalltemperaturen kann das Aluminiumband aus dem walzharten Zustand H18 oder H19 in den bevorzugten Materialzustand H48 oder H49 überführt werden, der für die Fertigung beispielsweise von Getränkedosen einen guten Kompromiss aus Festigkeit und Umformbarkeit bereitstellt. Maximale Metalltemperaturen von 230 °C bis 260 °C führen zu höheren Festigkeiten des Aluminiumbands bei gleichzeitiger prozesssicherer Durchhärtung der Beschichtung. Eine geringere Einbrenndauer oder eine niedrigere Einbrenntemperatur führt generell zu einer geringeren Temperaturbelastung des Aluminiumbands und damit zu höheren Festigkeiten des Aluminiumbands. In Kombination mit der oben genannten maximalen Metalltemperatur ermöglichen die genannten Einbrenndauern eine wirtschaftliche Herstellung des Aluminiumbands mit antibakterieller Beschichtung bei gleichzeitig ausreichender Aushärtung der Beschichtung.

Gemäß einer weiteren Lehre der Erfindung wird ein Dosendeckel einer Dose, insbesondere einer Getränkedose, vorzugsweise hergestellt aus einem erfindungsgemäßen Aluminiumband dadurch bereitgestellt, dass der Dosendeckel eine ein- oder beidseitige antibakterielle Beschichtung aufweist, wobei die antibakterielle Beschichtung als antibakterielle Substanz ZnMoO₄ enthält, bevorzugt als antibakterielle Substanz ausschließlich ZnMoO₄ enthält. Wie bereits zuvor ausgeführt, ermöglicht die antibakterielle Beschichtung die Verwendung von sehr wirtschaftlichen Verfahrensschritten zur Bereitstellung von Dosendeckeln und kann auf diesen die Besiedelung der beschichteten Oberfläche mit bakteriellen Keimen signifikant unterbinden.

Die antibakterielle Beschichtung des Dosendeckels weist bevorzugt ein Trockengewicht von 0,5 g/m² bis 15 g/m², bevorzugt 2 g/m² bis 12 g/m² oder vorzugsweise 3 g/m² bis 6 g/m² auf. Bei diesen Trockengewichten werden sowohl die antibakteriellen Eigenschaften am fertigen Dosendeckel bereitgestellt sowie die Herstellung des Dosendeckels mit gleichbleibenden antibakteriellen Eigenschaften ermöglicht.

Gemäß einer weiteren Ausgestaltung wird ein erfindungsgemäßer Dosenkörper einer Dose, insbesondere einer Getränkedose dadurch bereitgestellt, dass der Dosenkörper eine ein- oder beidseitige antibakterielle Beschichtung aufweist, wobei die antibakterielle Beschichtung als antibakterielle Substanz ZnMoO₄ enthält, bevorzugt als antibakterielle Substanz ausschließlich ZnMoO₄ enthält.

Gemäß einer Ausgestaltung des Dosenkörpers weist die antibakterielle Beschichtung ein Trockengewicht von 0,5 g/m² bis 15 g/m², bevorzugt 2 g/m² bis 12 g/m² oder vorzugsweise 3 g/m² bis 6 g/m² auf. Mit den spezifischen Trockengewichten können sowohl die Anforderungen für die Dosenkörperfunktionen wie Bereitstellung von Flächen für die Produktwerbung als auch antibakterielle Eigenschaften bereitgestellt werden.

Schließlich kann eine erfindungsgemäße Getränkedose aufweisend einen erfindungsgemäßen Dosendeckel und/oder einen erfindungsgemäßen Dosenkörper bereitgestellt werden.. Da die Getränkedose selbst häufig als Trinkgefäß dient, kann die erfindungsgemäße antibakterielle Beschichtung die Hygieneeigenschaften der Getränkedosen deutlich verbessern.

Im Weiteren wird die Erfindung durch die Beschreibung von Ausführungsbeispielen in Verbindung mit der Zeichnung näher erläutert. Die Zeichnung zeigt in
- Fig. 1a,b: Ausführungsbeispiele von erfindungsgemäßen Aluminiumbändern mit ein- oder beidseitiger antibakterieller Beschichtung in einer schematischen Schnittansicht,
- Fig. 2: in einer perspektivischen Darstellung ein Ausführungsbeispiel einer Verpackung eines flüssigen Füllguts in Form einer Getränkedose,
- Fig. 3: in einer schematischen Darstellung ein Ausführungsbeispiel gemäß dem Verfahren zur Herstellung des Aluminiumbands bis zum Kaltwalzen des Aluminiumbands an Enddicke und
- Fig. 4: die optionale Passivierung mit anschließender Beschichtung des Aluminiumbandes mit einer antibakteriellen Beschichtung gemäß einem Ausführungsbeispiel in einer schematischen Darstellung.

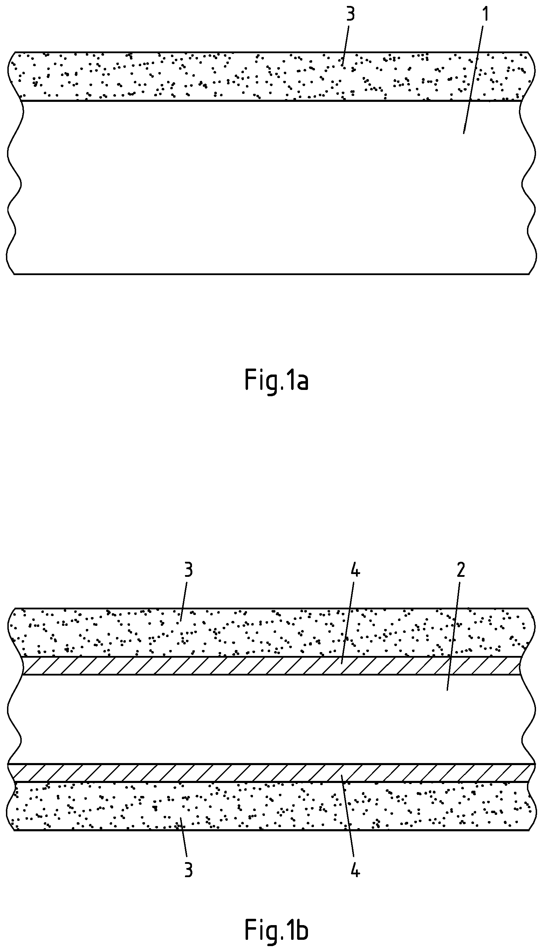

Die Fig. 1a und 1b zeigen Ausführungsbeispiele von Aluminiumbändern 1, 2 in einer schematischen Schnittansicht in Form eines einseitig beschichteten Aluminiumbands 1 und eines zweiseitig beschichteten Aluminiumbands 2. Die ein- oder beidseitige Beschichtung 3 ist als antibakterielle Beschichtung ausgebildet. Sie weist als antibakterielle Substanz zumindest ZnMoO₄ auf. Vorzugsweise enthält die antibakterielle Beschichtung als antibakterielle Substanz ausschließlich ZnMoO₄. Es hat sich herausgestellt, dass auch die ausschließliche Verwendung von ZnMoO₄ als antibakterielle Substanz in der antibakteriellen Beschichtung ausreicht, um sehr gute antibakterielle Eigenschaften der Oberfläche des Aluminiumbands bereitzustellen. Gleichzeitig wurde herausgefunden, dass das Metallsalz ZnMoO₄ eingebunden in der Lackschicht der Beschichtung nur sehr geringe Tendenzen zur Migration in mit der antibakteriellen Beschichtung in Kontakt stehenden Flüssigkeiten besitzt.

Vorzugsweise weist die antibakterielle Beschichtung 3 Konzentrationen von 0,1 Gew.-% bis maximal 4 Gew.-%, vorzugsweise 0,2 Gew.-% bis 2 Gew.-%, bevorzugt 0,25 Gew.-% bis 1,0 Gew.-% sowie weiter bevorzugt 0,5 Gew.-% bis 1,0 Gew.-% an ZnMoO₄ auf. Es hat sich herausgestellt, dass bei diesen Konzentrationen gute bis sehr gute antibakterielle Wirkungen erzielt werden können.

Das Trockengewicht der ein- oder beidseitigen antibakteriellen Beschichtung des Aluminiumbandes entspricht einer Angabe zur Dicke der Beschichtung. Ausführungsbeispiele der erfindungsgemäßen antibakteriellen Beschichtung weisen ein Trockengewicht von 0,5 g/m² bis 15 g/m², vorzugsweise 2 g/m² bis 12 g/m², bevorzugt 3 g/m² bis 6 g/m², weiter bevorzugt 3,5 g/m² bis 5 g/m² auf. Die entsprechenden Trockengewichte sind an die verschiedenen Einsatzzwecke des Aluminiumbands in Bezug auf die Bereitstellung von Verpackungen von festen, flüssigen oder gasförmigen Stoffen, insbesondere Getränkedosen, abgestellt. Eine beidseitige antibakterielle Beschichtung zeigt Fig. 1b.

Das Aluminiumband 1, 2 der in Fig. 1a und 1b dargestellten Ausführungsbeispiele weist eine Dicke von 0,1 mm bis 0,3 mm, vorzugsweise 0,15 mm bis 0,25 mm. Aluminiumbänder mit entsprechenden Dicken können besonders bevorzugt zur Herstellung von Getränkedosen verwendet werden. Alternativ können aber auch andere Verpackungen von festen, flüssigen oder gasförmigen Füllgütern daraus hergestellt werden.

Die Aluminiumbänder 1, 2 bestehen bevorzugt aus einer Aluminiumlegierung für Verpackungen, insbesondere Getränkedosen vom Typ AA5xxx oder vom Typ AA3xxx, vorzugsweise AA5182 oder AA3104, AA3105 oder AA3004. Die genannten Aluminiumlegierungstypen weisen besonders hohe Festigkeiten und besonders gute Umformeigenschaften auf. Die Aluminiumlegierungen vom Typ A3xxx, insbesondere AA3104 werden dabei für die notwendigerweise weniger festen Bereiche einer Getränkedose verwendet, also zum Beispiel für den Dosenkörper, während die Varianten vom Typ AA 5xxx, insbesondere AA5182 für das Aluminiumband des Dosendeckels verwendet wird.

Gemäß dem Ausführungsbeispiel der Fig. 1b ist eine beidseitige antibakterielle Beschichtung 3 und zusätzlich je eine Passivierungsschicht 4 vorgesehen, welche die Haftung der antibakteriellen Beschichtung 3 noch einmal deutlich erhöht. Diese Passivierungsschicht kann auch nur einseitig aufgebracht werden, beispielsweise wenn nur auf einer Seite des Aluminiumbands eine antibakterielle Beschichtung verwendet wird. Dabei ist die Passivierungsschicht vorzugsweise chromfrei ausgebildet, um für den Kontakt mit Lebensmitteln besser geeignet zu sein. Als Passivierungsschicht wird beispielsweise eine Zirkonium-Phosphatierung bevorzugt vorgesehen.

Vorzugsweise ist die antibakterielle Beschichtung als antibakterielle Lackschicht ausgebildet, welche mindestens ein Bindemittel und ZnMoO₄ als antibakterielle Substanz enthält. Lacke sind flüssige, Pasten förmige oder Pulver förmige Beschichtungsstoffe, welche Bindemittel sowie organische Lösemittel und/oder Wasser enthalten. Das Bindemittel soll dabei die spätere Beschichtung auf der Aluminiumbandoberfläche bilden. Wird das Bindemittel mit der antibakteriellen Substanz ZnMoO₄ gemischt, kann über die Lackschicht die antibakterielle Substanz besonders gleichmäßig über eine große Oberfläche des Aluminiumbands verteilt werden. Bevorzugt weist dabei die antibakterielle Substanz ZnMoO₄ eine Partikelgröße von 0,1 µm bis 20 µm, bevorzugt 0,5 µm bis 5 µm auf, weiter bevorzugt 0,5 µm bis 2 µm. Durch die geringen Partikelgrößen kann eine sehr gute und homogene Verteilung der antibakteriellen Substanz in der Beschichtung erreicht werden.

Es hat sich herausgestellt, dass die antibakterielle Substanz ZnMoO₄ es ermöglicht, antibakterielle Lackschichten bereitzustellen, welche Pasteurisation beständig sind, da hier bereits erprobte Bindemittel eingesetzt werden können. Die Pasteurisationbeständigkeit wurde für die erfindungsgemäßen Beschichtungen durch eine Erwärmung auf 85 °C für 30 Minuten getestet. Die Beschichtung soll nach dieser Behandlung keine oder nahezu keine Vergilbung, auch "Blushing" genannt, aufweisen. Die Pasteurisation von Lebensmitteln ist in der Regel deutlich kürzer, um die Inhaltsstoffe der Lebensmittel soweit wie möglich unverändert zu lassen.

Gleiches gilt für die Sterilisationsbeständigkeit, die durch Kontakt mit 130 °C heißem Wasserdampf für 45 Minuten getestet wurde. Auch hier zeigte die antibakterielle Substanz keine negativen Auswirkungen auf sterilisationsbeständige Lacksysteme. Es ist daher möglich antibakterielle und sterilisationsbeständige Aluminiumbänder bereitzustellen.

Vorzugsweise besteht die antibakterielle Beschichtung 3 aus einer Lackschicht auf Lösemittel-Epoxidharz-Basis, auf Lösemittel-Polyester-Basis, auf Basis einer Epoxidharz-Wasser-Dispersion oder auf Basis einer Polyolefin-Wasser-Dispersion.

Insbesondere die Epoxidharz basierenden Beschichtungen sind häufig sehr gut temperaturbeständig und zeigen kein "Blushing" bei einer Pasteurisation bei 85 °C für 30 Minuten bei einer Konzentration bis 4 Gew.-% ZnMoO₄. Ein "Blushing" konnte auch für Beschichtungen mit 0,5 Gew.-% ZnMoO₄ unter Sterilisationsbedingungen bei Kontakt mit 130 °C heißem Wasserdampf für 45 Minuten nicht festgestellt werden.

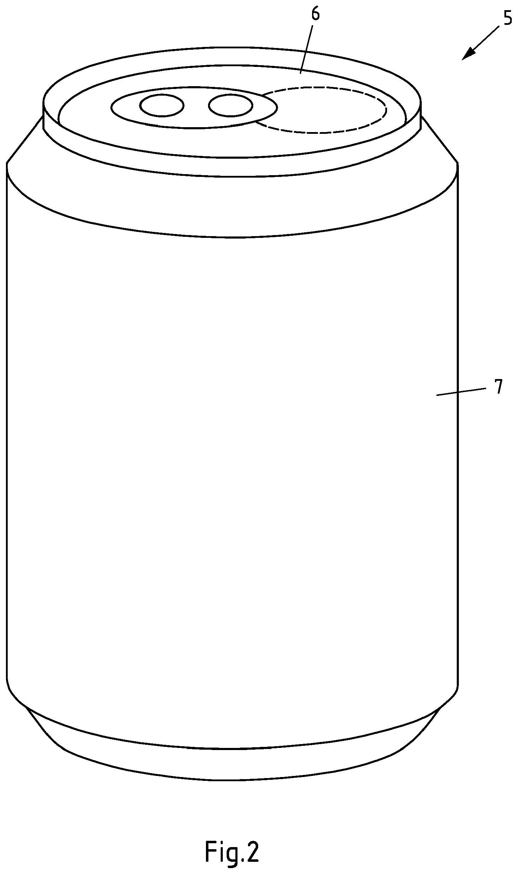

Fig. 2 zeigt nun ein Ausführungsbeispiel einer Verpackung in Form einer Getränkedose 5 mit einem Dosendeckel 6 und einem Dosenkörper 7. Der Dosenkörper 7 kann auch zweiteilig ausgebildet sein, sodass die Dose insgesamt aus 3 Blechteilen zusammengesetzt ist. Gemäß einem Ausführungsbeispiel weist die antibakterielle Beschichtung des Dosendeckels ein Trockengewicht von 0,5 g/m² bis 15 g/m², bevorzugt 2 g/m² bis 12 g/m² oder vorzugsweise 3 g/m² bis 6 g/m² auf. Der Dosenkörper kann ebenfalls ein Trockengewicht von 0,5 g/m² bis 15 g/m², bevorzugt 2 g/m² bis 12 g/m² oder vorzugsweise 3 g/m² bis 6 g/m² als antibakterielle Beschichtung aufweisen. Durch die bevorzugte Verwendung der antibakteriellen Beschichtung mit ausschließlich ZnMoO₄, besteht die Möglichkeit die Hygiene während des Trinkens von Getränkedosen noch einmal zu verbessern, wenn beispielsweise das Aluminiumdosendeckelband eine entsprechende ein- oder beidseitige antibakteriellen Beschichtung aufweist. Die Besiedelung der Oberfläche der Getränkedose wird schon bei geringen Konzentration der antibakteriellen Substanz ZnMoO₄ deutlich gehemmt und die Anzahl von vorhandenen Keimen innerhalb von 24h deutlich reduziert.

Entsprechende Versuchsergebnisse zeigen Tests verschiedener Ausführungsbeispiele der Erfindung im Vergleich mit einer nicht beschichteten Nullprobe Nr. 11. Die Ergebnisse der Tests sind in der Tab. 1 dargestellt.

Alle in Tabelle 1 dargestellten Ausführungsbeispiele weisen ein Trockengewicht der antibakteriellen Beschichtung von 3,5 g/m² bis 4,5 g/m² auf, wobei die Konzentration von ZnMoO₄ von 0,25 Gew.-% bis 2 Gew.-% variiert wurde. Als antibakterielle Beschichtung wurde eine Lackschicht auf Lösemittel-Epoxidharz-Basis verwendet.

Die Untersuchung der antibakteriellen Wirkung erfolgte gemäß JIS Z2801, respektive ISO 22196. Abweichend von diesen Normen erfolgte die Bestimmung der Keimzahl der Proben als Doppelbestimmung bei zum Teil unterschiedlichen Kontaktzeiten.

4 cm x 4 cm große beschichtete Testflächen bestehend aus einem erfindungsgemäßen Aluminiumband wurden hierzu zuvor mit 70 %-Ethanol gereinigt und anschließend mit einem Testkeim, hier Escherichia Coli, mit einer Menge von 400 µl/Prüfstück beimpft. Ein Teil der Proben wurden unmittelbar nach der Beimpfung mit Neutrallösung abgespült und die Keimzahl bestimmt. Bei dem anderen Teil der Proben erfolgte die Spülung mit Neutrallösung nach spezifischen Zeiträumen von 2h, 4h, 6h oder 24h in einer Klimakammer bei 36 +/- 1°C bei einer relativen Feuchte von mehr als 90 %. Die Bestimmung der Reduktion der Keimzahl erfolgte im Vergleich zur Ausgangskeimzahl von unbehandelten Testflächen.

Es hat sich gezeigt, dass bei einer antibakteriellen Beschichtung mit 0,25 Gew.-% ZnMoO₄ bereits nach einem 24 Stunden Test gemäß JIS Z2801 respektive ISO 22196 innerhalb von 24 Stunden die Anzahl der bakteriellen Keime um mehr als 99 % reduziert werden konnten. Ab einem Gehalt von 0,5 Gew.-% ZnMoO₄ in der Beschichtung konnte keine Verbesserung der antibakteriellen Wirkung bzw. Reduktion der Keime nach 24h erreicht werden. Die Zugabe von Additiven, beispielsweise polyethermodifiziertes Polydimethylsiloxan verbesserte das Ergebnis, wie beispielsweise Nummer 4 zeigt, nicht.

Es konnte eine beschleunigte Reduktion der Keimzahl bei Erhöhung der Konzentration an ZnMoO₄ nach 2 h, 4 h oder 6 h festgestellt werden. Insbesondere ergaben sich bei 0,5 Gew.-% ZnMoO₄ eine Reduktion der Keimzahl um 92,51 % nach 6h. Allerdings ergab sich eine Reduktion um 97,22 % bei 1 Gew.-% ZnMoO₄ nach 6 h, wie Probe Nr. 2 der Tab. 1 zeigt.

Probe Nr. 3 wurde zusätzlich einer lebensmittelrechtlichen Migrationsprüfung unterzogen, wobei eine Gesamtmigration von weniger als 10 mg/dm² als zulässig angesehen wird. Die Probe Nummer 3 erreichte in Bezug auf Zink 0,16 mg/dm² sowie 0,01 mg/dm² Molybdän nach 10 Tagen in Kontakt mit 3 % Essigsäure bei einer Temperatur von 60 °C. Die Versuchsbedingungen wurden unter Berücksichtigung der Anforderung gemäß der EU-Verordnung Nummer 10/2011 (OM2) durchgeführt. Abgesehen von der Korrosion des Aluminiumbands konnte nur eine äußerst geringe Migration von Zink und Molybdän von 0,16 mg/dm² bzw. 0,01 mg/dm² für Molybdän gemessen werden. Die antibakterielle Beschichtung ist damit besonders gut für den Kontakt mit Lebensmitteln geeignet.

Die nicht antibakteriell beschichtete Probe Nr. 11 (Nullprobe) zeigt deutlich, dass nach 24 Stunden keine deutliche Reduktion der Keimanzahl erzielt werden konnte. Die Probe Nr. 15, mit 0,5 Gew.-% ZnMoO₄, welche einer Pasteurisation bei 85 °C für 30 Minuten unterzogen wurde, zeigte die höchste Reduktionszahl an Bakterien innerhalb von 24 Stunden gemäß ISO 22196. Gleichzeitig wurde kein Vergilben der Lackschicht (Blushing) festgestellt.

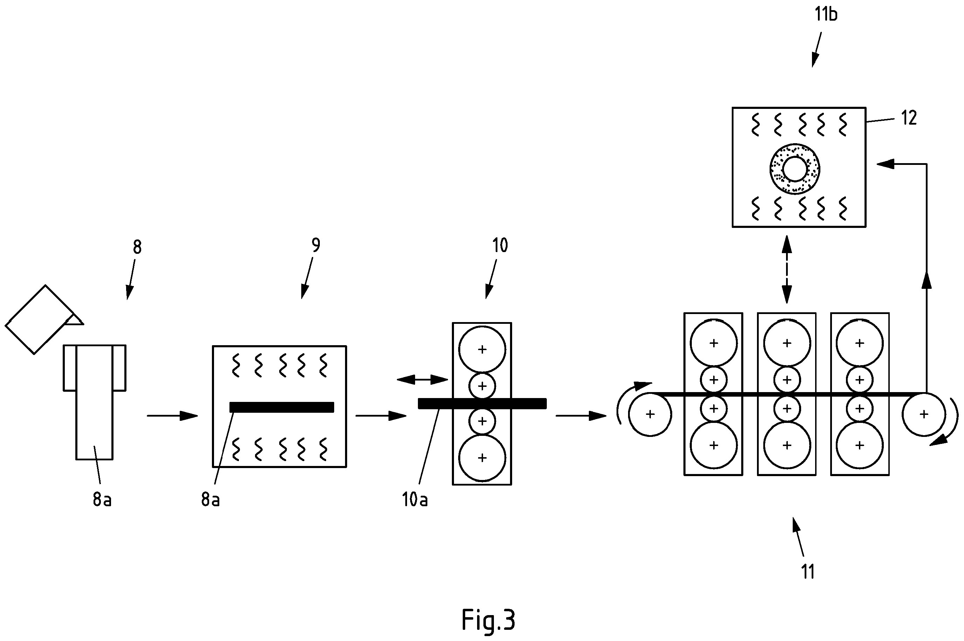

Fig. 3 zeigt nun in einer schematischen Ansicht die einzelnen Verfahrensschritte zur Herstellung eines Ausführungsbeispiels des Aluminiumbands bis zum Kaltwalzen des Aluminiumbands an Enddicke.

Zunächst wird in Schritt 8 ein Walzbarren 8a, beispielsweise im DC-Gussverfahren hergestellt. Analog dazu kann auch ein nicht dargestelltes Bandgießen zur Herstellung eines Gießbands verwendet werden. Anschließend wird der Walzbarren 8a einer Homogenisierung in Schritt 9 unterzogen und anschließend im Schritt 10 zu einem Warmband 10a warmgewalzt. Das Warmwalzen kann in reversierenden Gerüsten und/oder in Tandemgerüsten mit Mehrfachstichen erfolgen. Anschließend wird das Warmband im Schritt 11 zu einem Kaltband 11a auf Enddicke kaltgewalzt. Während des Kaltwalzens kann eine Zwischenglühung im Kammerofen 12 oder im nicht dargestellten Durchlaufofen erfolgen. Auch eine abschließende Wärmebehandlung ist nicht ausgeschlossen, wobei jedoch vorzugsweise im Walzzustand walzhart H18 oder H19 die kaltgewalzten Aluminiumbänder dem nächsten Verfahrensschritt der Beschichtung zugeführt werden.

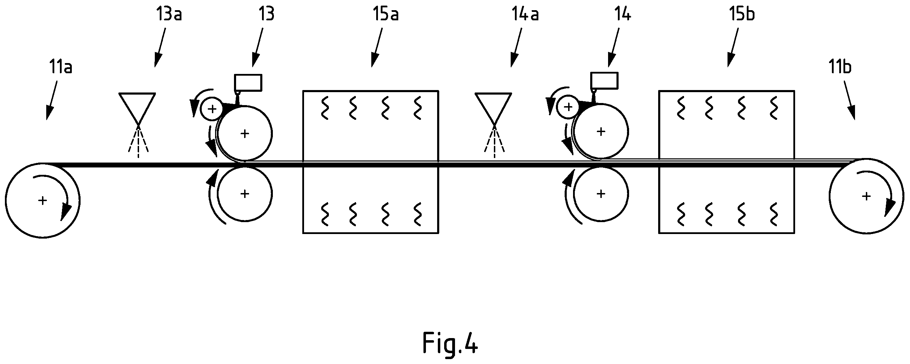

Ein Ausführungsbeispiel eines Beschichtungsverfahrens ist in Fig. 4 dargestellt. Das kaltgewalzte Aluminiumband 11a wird von einem Coil abgewickelt und einem Passivierungsschritt 13 zugeführt, welcher hier als Roll-Coating-Verfahren ausgebildet ist. Alternativ kann auch ein Aufsprühen der Passivierungschemikalie, beispielsweise ein elektrostatisches Aufsprühen 13a der Passivierungschemikalie erfolgen. Alternativ kann die Passivierung auch durch ein Durchlaufen eines Bads mit der Passivierungsflüssigkeit erfolgen. Das Roll-Coatingverfahren hat sich jedoch aufgrund der möglichen, hohen Durchlaufgeschwindigkeiten und der guten Genauigkeit des Auftrags der Passivierungschemikalie bewährt. Bei der Oberflächenpassivierung werden No-Rinse-Verfahren bevorzugt, bei welchen das Passsicherungsmittel, bevorzugt Zirkoniumphosphat auf dem Aluminiumband verbleibt und nicht abgespült werden muss. Hierzu wird das Aluminiumband 11a nach dem Aufbringen der Passivierungschemikalie in einem Ofen 15a getrocknet.

Die Beschichtung der antibakteriellen Beschichtung erfolgt bevorzugt ebenfalls unter Verwendung eines Roll-Coating-Verfahren 14. Andere Verfahren zum Aufbringen der antibakteriellen Beschichtung, wie beispielsweise ein Aufsprühen oder ein elektrostatisches Aufsprühen 14a sind grundsätzlich auch denkbar.

Schließlich erfolgt das Einbrennen der antibakteriellen Beschichtung bei einer Maximaltemperatur von 180 °C bis 300 °C, vorzugsweise 230 °C bis 260 °C in einem Einbrennofen 15, bei welchem die maximale Metalltemperatur für die Einbrenndauer von 5 Sekunden bis 45 Sekunden, vorzugsweise zwischen 8 Sekunden und 30 Sekunden gehalten wird. Anschließend kann das mit einer antibakteriellen Beschichtung versehene Aluminiumband 11b einem Herstellungsprozess von Dosendeckeln oder Dosenkörpern zur Verfügung gestellt werden.

**Tab.1**

| **Probe** | **Bemerkung** | **lebensmittelrechtliche Migrationsprüfung** (EU-VO Nr 10/2011 (OM2)) | **Bakterien (nach 24 h in %-Reduktion) JIS Z 2801 / ISO 22196** | **Bakterien (%-Reduktion im Zeitintervall)** |
|---|---|---|---|---|
| 1 | Beschichtung mit 0,5 % ZnMoO₄ | | 99,99 | 2 h: 76,00 |
| | | | | 4 h: 82,44 |
| | | | | **6 h: 92,51** |
| 2 | Beschichtung mit 1 % ZnMoO₄ | | 1. Messung: 99,99 | 2 h: 87,33 |
| | | | | 4 h: 82,67 |
| | | | 2.Messung: 99,98 | |
| | | | | **6 h: 97,22** |
| 3 | Beschichtung mit 2 % ZnMoO₄ | Gesamt: < 10 mg/dm² | | |
| | | Zink: 0,16 mg/dm² | 99,99 | |
| | | Molybdän: 0,01 mg/dm² | | |
| 4 | Beschichtung mit 1 % ZnMoO₄ und 5 % Additive | | 99,99 | |
| 11 | Nullprobe | | keine | 2 h: 18,67 |
| | | | | 4 h: 41,56 |
| | | | | 6 h: 62,89 |
| 12 | Beschichtung mit 0,25 % ZnMoO₄ | | 99,84 | |
| 15 | Beschichtung mit 0,5 % ZnMoO₄ pasteurisiert | | ≥ 99,99 | |

## Patentansprüche

1. Aluminiumband (1, 2), insbesondere zur Herstellung einer Verpackung eines festen, flüssigen oder gasförmigen Füllguts, bestehend aus einer Aluminiumlegierung, wobei das Aluminiumband (1) mindestens eine ein- oder eine beidseitige antibakterielle Beschichtung (3) aufweist,
**dadurch gekennzeichnet, dass**
die antibakterielle Beschichtung (3) als antibakterielle Substanz ZnMoO₄ enthält.

2. Aluminiumband (1, 2) nach Anspruch 1,
**dadurch gekennzeichnet, dass**
die Konzentration von ZnMoO₄ in der antibakteriellen Beschichtung (3) mindestens 0,1 Gew.-% bis maximal 4 Gew.-%, vorzugsweise 0,2 Gew.-% bis 2 Gew.-%, bevorzugt 0,25 Gew.-% bis 1 Gew.-%, weiter bevorzugt 0,5 Gew.-% bis 1 Gew.-% beträgt.

3. Aluminiumband nach Anspruch 1 oder 2,
**dadurch gekennzeichnet, dass**
die ein- oder beidseitige antibakterielle Beschichtung (3) des Aluminiumbands (1, 2) ein Trockengewicht von 0,5 g/m² bis 15 g/m², vorzugsweise 2 g/m² bis 12 g/m², bevorzugt 3 g/m² bis 6 g/m², weiter bevorzugt 3,5 g/m² bis 5 g/m² im aufweist.

4. Aluminiumband nach einem der Ansprüche 1 bis 3,
**dadurch gekennzeichnet, dass**
das Aluminiumband (1, 2) eine Dicke von 0,1 mm bis 0,3 mm, vorzugsweise 0,15 mm bis 0,25 mm aufweist.

5. Aluminiumband nach einem der Ansprüche 1 bis 4,
**dadurch gekennzeichnet, dass**
das Aluminiumband ein Aluminiumband zur Herstellung einer Dose, vorzugsweise ein Aluminiumband zur Herstellung einer Getränkedose (7), insbesondere ein Aluminiumdosendeckelband ist.

6. Aluminiumband nach einem der Ansprüche 1 bis 5,
**dadurch gekennzeichnet, dass**
das Aluminiumband (1, 2) aus einer Aluminiumlegierung vom Typ AA5xxx oder AA3xxx, vorzugsweise AA5182 oder AA3104 besteht.

7. Aluminiumband nach einem der Ansprüche 1 bis 6,
**dadurch gekennzeichnet, dass**
die antibakterielle Beschichtung (3) als antibakterielle Lackschicht ausgebildet ist, welche mindestens ein Bindemittel und ZnMoO₄ als antibakterielle Substanz enthält.

8. Aluminiumband nach einem der Ansprüche 1 bis 7,
**dadurch gekennzeichnet, dass**
das Aluminiumband (1, 2) mindestens eine ein- oder beidseitige chromfreie Passivierungsschicht aufweist.

9. Aluminiumband nach einem der Ansprüche 1 bis 8,
**dadurch gekennzeichnet, dass**
die antibakterielle Beschichtung pasteurisations- und/oder sterilisationsbeständig ist.

10. Aluminiumband nach einem der Ansprüche 1 bis 9,
**dadurch gekennzeichnet, dass**
die antibakterielle Beschichtung (3) eine Lackschicht auf Lösemittel-Epoxidharz-Basis, auf Lösemittel-Polyester-Basis, auf Basis einer Epoxidharz-Wasser-Dispersion, einer Polyester-Wasser -Dispersion oder auf Basis einer Polyolefin-Wasser-Dispersion ist.

11. Verfahren zur Herstellung eines Aluminiumbands nach Anspruch 1 bis 10, bei welchem ein Walzbarren (8a) oder ein Gießband aus einer Aluminiumlegierung gegossen wird, der Walzbarren (8a) oder optional das Gießband homogenisiert wird, der Walzbarren oder das Gießband zu einem Warmband (10a) warmgewalzt wird, das Warmband mit mindestens einer Zwischenglühung oder ohne Zwischenglühung auf eine optionale Enddicke von 0,1 mm bis 0,3 mm kaltgewalzt und optional einer abschließenden Wärmebehandlung unterzogen wird,
**dadurch gekennzeichnet, dass**
das Aluminiumband (1, 2) ein- oder beidseitig mit mindestens einer antibakteriellen Beschichtung (3) beschichtet wird, wobei die antibakterielle Beschichtung ZnMoO₄ enthält, wobei vorzugsweise die antibakterielle Beschichtung (3) als antibakterielle Substanz ausschließlich ZnMoO₄ enthält.

12. Verfahren nach Anspruch 11,
**dadurch gekennzeichnet, dass**
das Aluminiumband nach dem Kaltwalzen an Enddicke einer ein- oder beidseitigen chromfreien Oberflächenpassivierung unterzogen wird.

13. Verfahren nach Anspruch 11 oder 12,
**dadurch gekennzeichnet, dass**
das Auftragen der antibakteriellen Beschichtung (3) auf das Aluminiumband (1, 2) durch ein ein- oder beidseitiges Coil-Coating-Verfahren, vorzugsweise unter Verwendung eines Roll-Coating-Verfahrens (14) erfolgt.

14. Verfahren nach einem der Ansprüche 11 bis 13,
**dadurch gekennzeichnet, dass**
die antibakterielle Beschichtung (3) bei einer maximalen Metalltemperatur von 180 °C bis 300 °C, vorzugsweise bei 230 °C bis 260 °C eingebrannt wird, wobei die Einbrenndauer zwischen 5 s und 45 s, vorzugsweise zwischen 8 s und 30 s beträgt.

15. Dosendeckel (6) einer Dose, insbesondere einer Getränkedose (5), vorzugsweise hergestellt aus einem Aluminiumband (1, 2) nach einem der Ansprüche 1 bis 11,
**dadurch gekennzeichnet, dass**
der Dosendeckel eine ein- oder beidseitige antibakterielle Beschichtung (3) aufweist, wobei die antibakterielle Beschichtung als antibakterielle Substanz ZnMoO₄ enthält..

16. Dosendeckel (6) einer Dose nach Anspruch 15,
**dadurch gekennzeichnet, dass**
die antibakterielle Beschichtung des Dosendeckels ein Trockengewicht von 0,5 g/m² bis 15 g/m², bevorzugt 2 g/m² bis 12 g/m² oder vorzugsweise 3 g/m² bis 6 g/m² aufweist.

17. Dosenkörper (6) einer Dose, insbesondere einer Getränkedose (5)
**dadurch gekennzeichnet, dass**
der Dosenkörper eine ein- oder beidseitige antibakterielle Beschichtung (3) aufweist, wobei die antibakterielle Beschichtung als antibakterielle Substanz ZnMoO₄ enthält.

18. Dosenkörper (7) einer Dose nach Anspruch 17,
**dadurch gekennzeichnet, dass**
die antibakterielle Beschichtung des Dosenkörpers ein Trockengewicht von 0,5 g/m² bis 15 g/m², bevorzugt 2 g/m² bis 12 g/m² oder vorzugsweise 3 g/m² bis 6 g/m² aufweist.
